# EUROPEAN PATENT SPECIFICATION

(11) **EP 1 081 404 B1**
(45) Date of publication and mention of the grant of the patent: **11.05.2005**
(21) Application number: 00124308.8
(22) Date of filing: 22.06.1992
(51) Int. Cl.: F16D 55/36, F16D 65/16, F16D 65/12, F16D 65/847, F16D 66/00, F16D 66/02, B64C 25/40, F16D 55/28

(54) **Brake assembly**
Bremsvorrichtung
Dispositif de freinage

(30) Priority: 20.06.1991 US 719130; 31.03.1992 US 861419
(43) Date of publication of application: 07.03.2001
(62) Divisional of application: 97110121.7
(73) Proprietor: RANCOURT, Claude, Beauce County, Quebec G5Y 2E1 (CA); RANCOURT, Yvon, Beauce County, Quebec G5Y 2E1 (CA)
(72) Inventor: RANCOURT, Claude, Beauce County, Quebec G5Y 2E1 (CA); RANCOURT, Yvon, Beauce County, Quebec G5Y 2E1 (CA)
(74) Representative: Casalonga, Axel

(56) References cited:
- DE-A- 3 606 876
- US-A- 3 999 634
- US-A- 4 186 822
- US-A- 4 658 936

## Description

### TECHNICAL FIELD

The present invention relates to disc brakes and more particularly to improvements in large area contact disc brakes for larger vehicles such as trucks, tractor-trailer vehicles in addition to other large wheeled vehicles and aircrafts.

### BACKGROUND ART

Canadian Patents 1,112,189, issued November 10, 1981 and 1,140,486, issued February 1, 1983, and U.S. Patent 4,102,438, issued July 25, 1978, Yvon Rancourt describe a disc brake for heavy road vehicles wherein the brake shoes are in contact with the much larger disc area, and a suitable brake cooling system is provided to cool the disc, thus making disc brakes practical for such vehicles. The present invention is an improvement over the above-mentioned patent.

There are braking systems available on various types of vehicles which include a positive mechanical brake of the type known as a fail-safe brake, that is, where the brakes are applied when pressure is released from the brakes. U.S. Patent 3,547,234, Cummins, December 15, 1970, describes a service brake for earthmoving trucks or tractors which includes a hydraulic brake system using a plurality of discs, and these discs are mechanically preloaded by a spring to provide a fail-safe brake. U.S. Patent 4,057,297, November 8, 1977, Beck et al, includes a brake system which has been preloaded by means of a spring, including the discs of the type described in the Cummins Patent. This pressurized air operated system uses a series of valves to modify the pressure exerted on the torque converter in order to avoid damage to the differential. This is a system that is utilized in very heavy machinery such as tractors, etc. These patents represent the state of the art in terms of fail-safe type brake systems using preloaded mechanical devices such as springs. The structures are complicated by the need to be adapted on heavy vehicles. What is required is a fail-safe type brake system of simple construction using pneumatic pressure for releasing the brakes and utilizing a simple disc brake construction of the type described in the Rancourt Patent wherein the disc is mounted to the adapter sleeve of a wheel on the vehicle and the brake housing is mounted to the vehicle on a dead axle.

It is also recognized that a major problem with large contact-area annular disc brakes of the type described in the above patents is heat. Great strides in improving heat dissipation were achieved with the introduction of vaned discs as described in U.S. Patent 4,102,438. However, vented discs of the type described required a thicker disc to retain the same strength. It was found for instance that it was not possible to house more than one cast-iron vented disc in an in-wheel brake housing, thus reducing the flexibility of design of such brakes, especially were multiple discs might be an advantage.

Another problem which has had a serious social impact is brake failure due to wear. Presently, there is no known reliable brake wear gauge for determining the remaining life of a particular set of brakes linings on a truck vehicle. It is necessary to remove housing parts on the wheel in order to examine and measure the remaining thickness of the lining and the brake disc. Since such examination adds to the down time of the truck or tractor- trailer, the tendency of the operator or driver- operator is to delay such inspection, with sometimes disastrous results, often costing innocent lives in highway accidents due to failed brakes of such large vehicles.

The document DE A 36 06 876 describes a measuring instrument to be used by an operator to check the wear of brakes.

It is an aim of the invention to provide a disc brake assembly which has improved means for monitoring wear in a brake assembly.

It is a further aim of the present invention to provide a disc brake for heavy road vehicles which relies on mechanical means for applying or actuating the brakes.

A construction in accordance with the present invention includes a disc brake assembly as disclosed in claim 1.

. In this specification, parking or safety brakes means the mechanism which allows the brakes to be applied when the vehicle is not in use or a malfunction should occur in the operation of the service brakes. Active or service brakes refers to the mechanism which provides for the brakes to be applied directly by the operator to slow the vehicle when moving on to bring it to a halt. It is understood that vehicle includes aircraft.

### BRIEF DESCRIPTION OF THE DRAWINGS

Having thus generally described the nature of the invention, reference will now be made to the accompanying drawings, showing by way of illustration, a preferred embodiment thereof, and in which:
Fig. 1 is a fragmentary axial cross-section taken through a brake assembly in accordance with the present invention;
Fig. 2 is an enlarged fragmentary cross-section of a detail of the brake assembly;
Fig. 3 is a further fragmentary enlarged axial cross-section taken of a further detail of the brake assembly;
Fig. 4 is an enlarged fragmentary front elevation of the brake assembly;
Fig. 5 is a horizontal cross-section taken along lines 5-5 of Fig. 4;
Fig. 6 is an enlarged fragmentary side elevation of a detail of the present invention;
Fig. 7 is an enlarged fragmentary vertical cross-section taken along lines 7-7 of Fig. 6;
Fig. 8 is an enlarged fragmentary cross-section of a detail shown in Fig.1.;
Fig. 9 is an enlarged fragmentary front elevation of the brake assembly with parts removed to view further details of the present invention;
Fig. 10 is a fragmentary axial section of another embodiment of a detail of the present invention;
Fig. 11 is an enlarged fragmentary axial section showing still another embodiment of the detail shown in Fig.10;
Fig. 12a is a schematic view of a spring disc which can be used in an embodiment of the present invention; and
Fig. 12b is a graph showing relative spring load characteristics of the spring disc.

### MODES FOR CARRYING OUT THE INVENTION

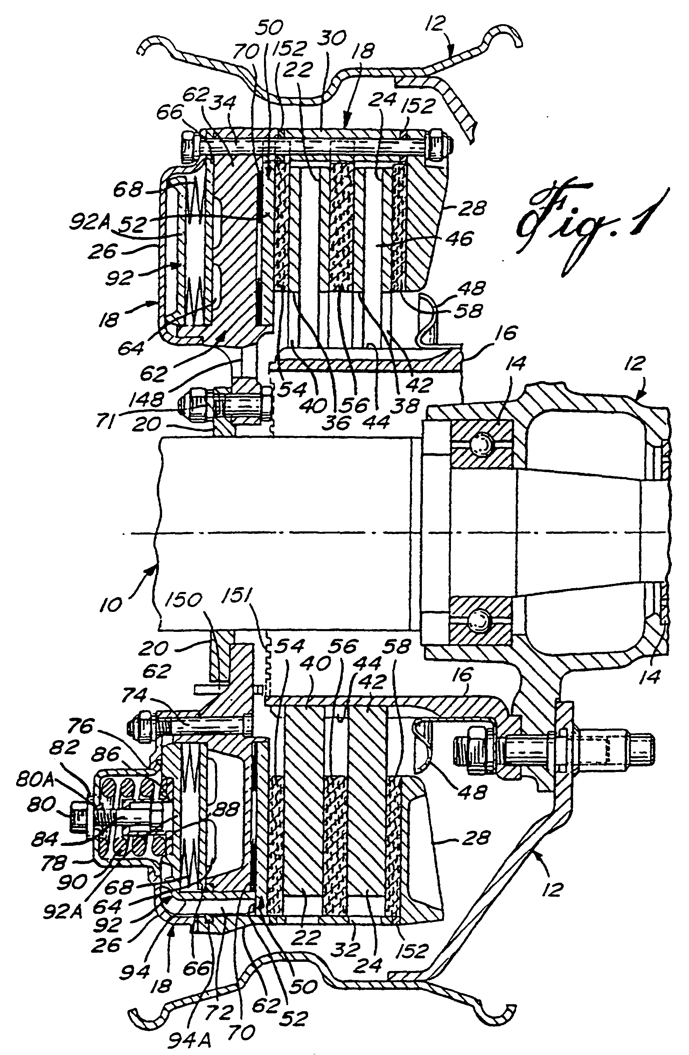

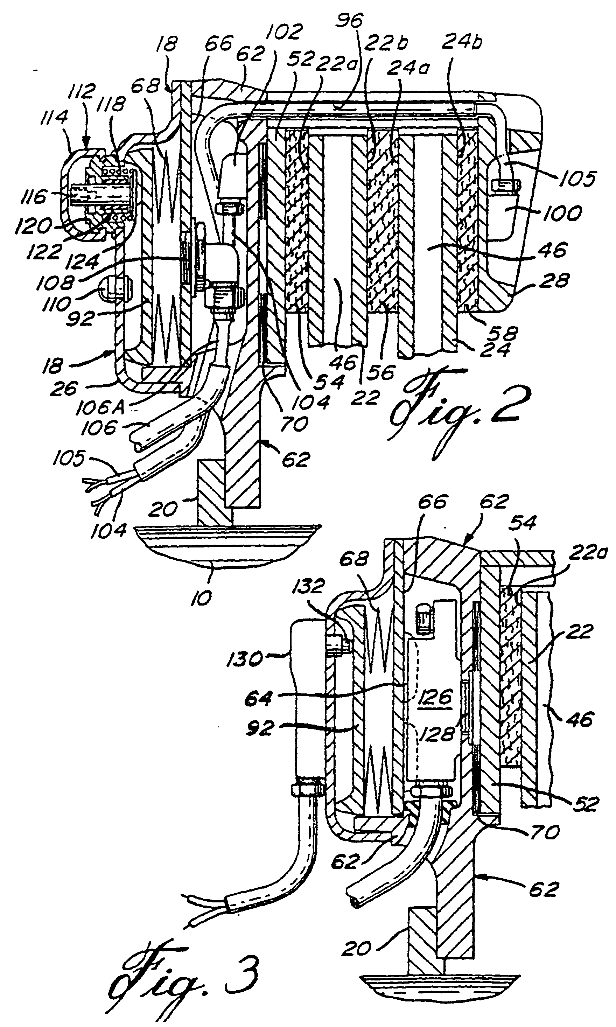

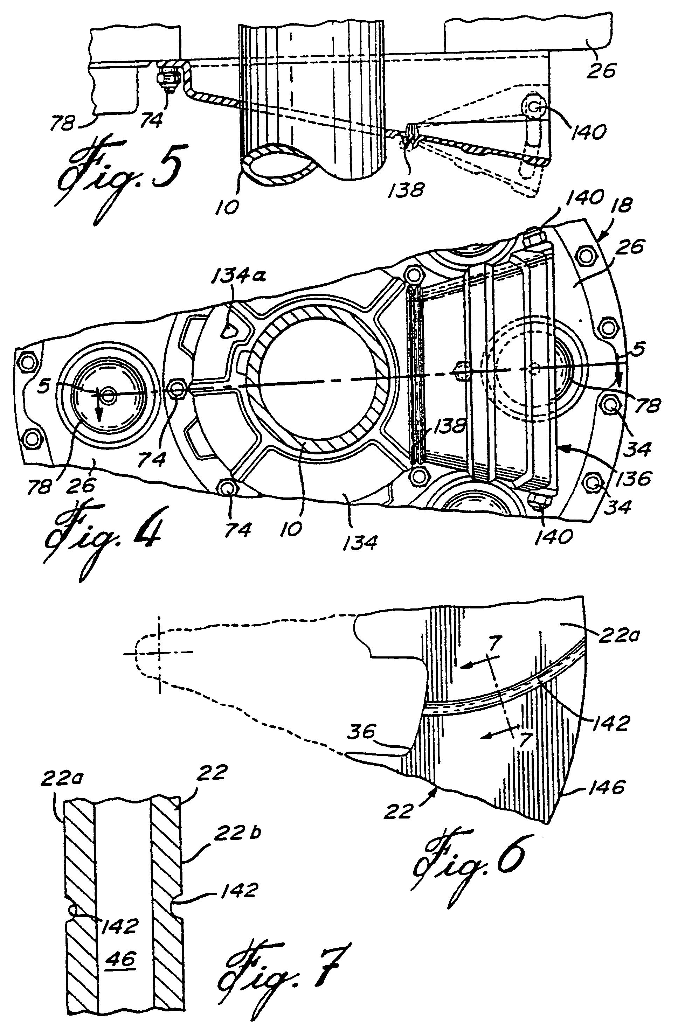

Referring to Figs. 1 to 3 the wheel assembly is shown with an axle 10. Axle 10 is a dead axle and bearings 14 mount the wheel 12 for rotation thereabout. An adapter sleeve 16 is mounted to the wheel 12 and extends concentrically over the axle 10 within the disc brake housing 18. A mounting ring 20 is fixed to the axle 10 and the housing 18 is mounted to the mounting ring 20. Two radial vented rotor discs 22 and 24 are shown within the housing 18. The housing 18 includes an annular housing wall 26 on the inboard side of the assembly, an annular housing wall 28 on the outboard side, and the whole is surrounded by a peripheral wall 30. Ventilation openings 32 are provided in the peripheral wall 30. Nut and bolt arrangements 34 secure the housing walls 26, 28, 30 and intermediate wall 62 together to form the housing 18.

The adapter sleeve 16 has axial splines 44 and the annular rotor brake discs 22 and 24 include disc openings 36 and 38 at the inner margins, respectively and the openings are interspersed with teeth 40 and 42. The teeth 40 and 42 engage the splines 44, thereby providing limited axial movement to the discs 22 and 24 while entraining the discs with the wheel 12.

Each brake disc 22 and 24 is provided with generally radial vent channels 46. It has been found that it is possible to maintain brake discs having vented channels within reasonable axial dimensions or thickness, by making the discs out of a composite of aluminum called "DURALCAN". Thus, it is possible to provide two or more brake discs in a space where only one vented cast iron brake disc was previously possible. The openings 36 and 38 of the discs 22 and 24 provide a ventilation passage as will be described later. An annular air deflector 48 is provided on adapter sleeve 16 in the plane of the housing wall 28.

The brake shoe 50 includes an annular backing plate 52 axially movable within the housing 18 to which is mounted a brake lining 54. The backing plate 52, brake lining 54, and annular brake lining 56 are provided with peripheral slots and teeth which engage between bolts 34 of the housing to restrain them from rotation but to allow them to slide axially. The brake lining 54 is adapted to frictionally engage the planar radial disc surface 22A. Annular brake lining 56 is provided between the discs 22 and 24 while annular brake lining 58 is mounted to the housing wall 28.

Annular spacing rings 152 are provided in the housing wall 30 and on the removal of the spacing rings 152 the housing will be reduced in axial dimension, thereby compensating for the wear on the linings 54, 56 and 58, and the wear on disc 22 and 24, as will be described later.

An intermediate wall 62 is mounted to the mounting ring 20 on the axle 10 by means of bolt and nut arrangements 71. Of course the intermediate wall 62 may be welded to mounting ring 20. The intermediate wall 62 also serves to support the housing wall 26, cylindrical wall 30, and housing wall 28 by means of the nut and bolt arrangements 74 and 34. Ventilation channels 64 are provided in the intermediate wall 62 while axial ventilation openings 148 are provided in spaced apart relationship near the inner opening of the annular intermediate wall 62.

In the present embodiment a plate 66 is placed against the intermediate wall 62 and is bolted thereto by means of nut and bolt arrangements 74 and 34 as shown. This plate 66 acts to support the bladder 68. Bladder 68 is an annular bladder made of stainless steel sheets, welded together as shown in Fig. 2. Air under pressure is fed to the bladder 68 through the tube 106 and inlet 108. Other gases may also be used to inflate the bladder. Stoppers (not shown) may be provided on the plate 66 adjacent the bladder 68 to prevent the bladder 68 from being crushed accidentally.

The spring abutment member 92 is mounted for axial movements relative to the intermediate wall 62. The spring abutment member 92 is in the form of a spider with legs 94 spaced about the periphery of an annular plate 92A and integral therewith. The legs 94 extend through openings 72 in the intermediate wall 62. Seals 94A are provided in the openings 72 surrounding the legs 94 in order to prevent dust, oil or other debris from entering anyfurther into the housing. The legs 94 engage the backing plate 52 near the peripheral edge thereof. In view of the stresses on the peripheral edge of the backing plate 52, the backing plate 52 may be constructed with a slight flare in the direction of the legs to compensate for the stresses which would apply when the legs 94 come into contact at the peripheral edge of the backing plate 52. The ends of legs 94 might also be provided with a slight beveled angle to compensate for such stresses.

Springs 90 urge the spring abutment plate 92 towards the brake shoe 50. A plurality of springs 90 are provided in annular spaced apart locations on the housing wall 26, each within a bell cover 78 fitted within a respective opening 76 on the wall 26. The bell covers 78, in one embodiment have a rotary bayonet type of connection to engage the housing wall 26 so that they can be removed in order to replace the springs 90 for instance. A nut 80 having a flange 82 is provided exteriorly of the bell cover 78. The nut 80 engages the threads of bolt 84. The head of the bolt 84 is in a blind sleeve 86 which has a flange 88 and which abuts the coil spring 90. Thus, if it is necessary to remove the tension of the springs 90 against the spring abutment plate 92 the nut 80 is rotated to point where the head of the bolt 84 moves the blind sleeve 86 towards the left in Fig. 1 thereby releasing the spring 90 from the spring abutment member 92. The nut 80 has a rivet shoulder 80A to retain the nut to the bell cover 78. Although a coil spring 90 is shown, other types of springs such as an annular disc spring may be used.

To provide a service brake, a bladder 70 is contemplated between the intermediate wall 62 and the backing plate 52 of brake shoe 50. The bladder 70 may be supplied with a gaseous fluid under pressure by an inlet similar to inlet 108 and tube 106.

During an emergency or parking brake mode, the springs 90 urge against the spring abutment plate 92 which in turn presses the legs 94 against the backing plate 52 of the brake shoe 50 to press the brake linings 54, 56 and 58 against the wear surfaces on the brake discs 22 and 24.

In other words, when the parking brakes or service brakes are applied, the pressure from the brake shoe assembly 50 moves the disc 22, brake lining 56 and disc 24 axially such that the friction surfaces 22a,b, 24a,b on discs 22, 24 frictionally engage the brake linings 54, 56 and 58.

Thus, the springs 90 provide a safety brake, for the vehicle which would typically be a truck, tractor, or trailer. Once the truck or tractor is in operation, and the safety brakes are to be released, air pressure would be supplied to the bladder 68 by means of tube 106 and inlet 108, thereby expanding the bladder 68 to move the spring abutment member 92 axially to overcome the springs 90 and thus removing the pressure on the brake shoe 50, thereby allowing the discs 22 and 24 and thus the wheel to rotate freely. During the operation of the vehicle, when it is necessary to apply the active brakes, air pressure would be directed through inlet 128 (Fig.3) to the bladder 70 in order to move the brake shoe 50 axially to positively apply the brakes. At the same time, air pressure could be released from the bladder 68, if necessary, although it is contemplated that the safety brakes would normally be kept released during operation.

As a safety feature, if the air pressure was to fall under a predetermined level, the springs 90 would overcome the bladder 68 and cause the safety brakes to be applied.

A quick release valve 126 is located on the intermediate wall 62 and communicates with the bladder 70. The quick release valve 126 will operate when it is required to deflate the bladder 70. At the same time the exhaust from the quick release valve will be directed along the intermediate wall 62 through ventilation channels 64 thereby enabling the intermediate wall 62 to be cooled as well as the adjoining parts of the housing such as plate 66. The gas under pressure within the bladder 70 cools during decompression as it is released.

On the other hand a choke or restricted passage 106A is provided on the conduit 106 to provide a slow release from the bladder 68 in order to avoid sudden violent application of the safety brakes while the vehicle is moving if a service brake malfunction should occur. A time delay valve might also be provided instead of the choke.

It has been contemplated to interconnect the bladders 68 and 70 by suitable valves to allow air to pass from one bladder to the other in the event that it is desirable to apply the parking brakes and the service brakes simultaneously. However, in most cases, the bladders 68 and 70 would be operated independently.

The end edge of the sleeve 16 may be provided with teeth and an antilock-brake sensor or counter sensor 150 may be mounted to the intermediate wall 62 as shown in Fig. 1 for the purpose of sensing the movement of the teeth 151 as the adapter sleeve 16 rotates.

As shown in Fig. 2 the brake assembly is provided with a thermal sensor 102 connected to the intermediate wall 62 and having a lead 104. A thermal sensor 100 may be provided on the housing wall 28 with a lead 105 extending through a passage 96 provided for in the housing wall 30. The thermal sensors 100 and 102 can provide temperature data with respect to the heat generated in the disc brake assembly, particularly near the disc. For instance the sensor 100 is right at the housing wall 28 next to the brake lining 58 near the disc 24. The thermal sensor 102 will indicate the temperature of the intermediate wall 62. Other sensors may be provided. The sensors 100 and 102 communicate with a temperature indicator on the control panel in the vehicle. Only one wheel may need be monitored in such a manner as it will give an indication of the type of heat generated in all the wheels of the same vehicle.

A warning device, connected to the brake thermal sensors, may be provided on the control panel in the cab. The warning device may be an audible signal such as a buzzer or a recorded voice, or a visual diode graphic screen with different colours to provide information on the temperature of the brakes. As is well known when the temperature of the brakes reaches a certain temperature, the brake pads begin to break down chemically, causing brake fading. The warning device could alert the operator to stop the vehicle in order to allow the brakes to cool down before the brakes reach a temperature level that might cause failure.

Another feature provided in the brake assembly described herein is a wear sensor as shown in Figs. 2 and 3. Because of the particular axial movement of the present brake assembly a wear sensor can be provided between the housing wall 26 and the spring abutment member 92 and the distance between the two elements measured, particularly when the brakes are applied through the parking brakes under the urging of springs 90.

In one embodiment as shown in Fig. 2 the wear sensor 112 includes a rubber cap 114 and a plunger 116 urged by a spring 118 within a blind sleeve 120. A bearing sleeve 122 is provided within the sleeve 120 to allow the plunger to slide towards the spring abutment member 92 under the urging of the spring 118. The plunger is provided with a flange 124 to receive the spring 118.

Another form of wear sensor is shown in Fig. 3. Wear sensor 130 is an electronic sensor including a plunger 132, spring mounted within the sensor 130, and urged against the spring abutment member 92. Sensor 130 communicates with a brake wear indicator on the control panel in the cab. Only one wheel need be monitored as it give a reliable indicator of the amount of wear occurring at all the wheels of a vehicle.

A still further wear sensor could be provided by allowing an opening in the housing wall 26, closed by a rubber nipple 110. When the rubber nipple is removed a measuring gauge can be inserted to determine the distance between the wall 26 and the spring abutment member 92 when the parking brake is applied.

It is also contemplated to provide the brake sensors on the housing wall 28 so that the measurements can be taken against a backing plate associated with brake shoe 58 when the latter is made to move axially and the bladder 70 is mounted on the wall 28 (not shown). The service brake must be applied in order to take a proper reading.

With the use of the brake wear sensors or gauges a warning device can be provided on the control panel in the cab of the vehicle which would include an audible signal such as a buzzer when the brake linings and discs have been worn to a predetermined level to at least warn the operator to replace the brake linings and discs or at least plan the maintenance thereof. It may even be contemplated to provide an interlock which would intervene at the parking brake control valve to impede the release of the parking brakes when the brake wear has exceeded accepted levels of wear. In any event the brake wear system can give warning or control at different levels of brake wear.

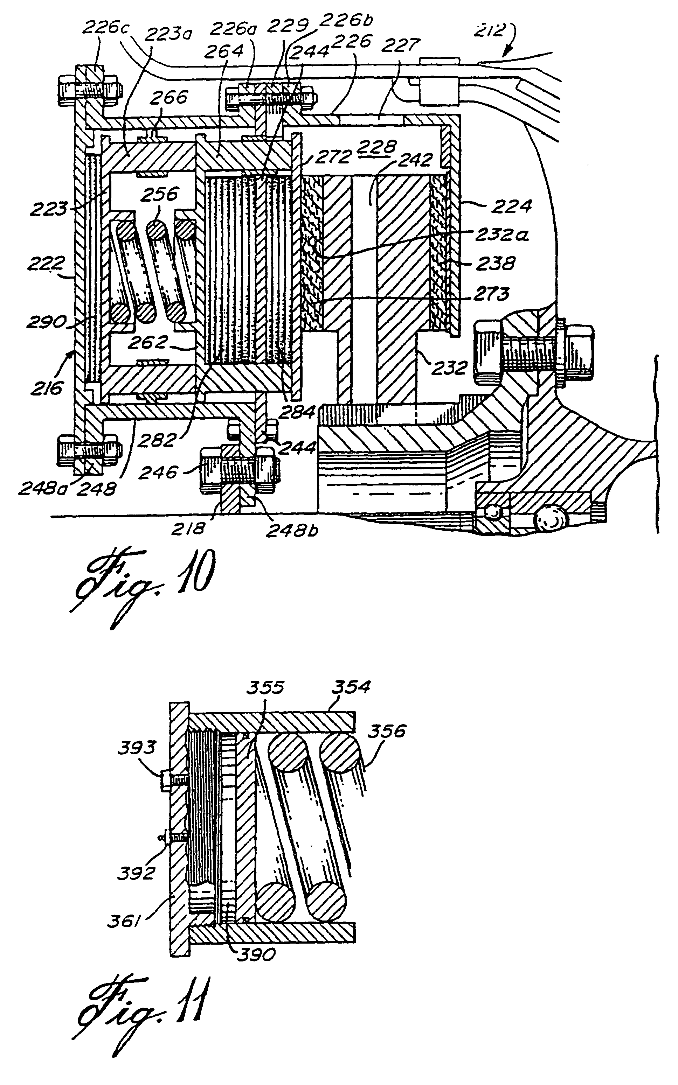

A ventilation system for the disc brakes is provided. As partially, previously described and shown in Figs. 1 and 9, openings 148 are located in the intermediate wall 62 and as shown in Fig. 4 a plenum 134, in the form of an annular cover, may be placed over the openings 148. The plenum 134 communicates with a scoop 136. The scoop 136 may be mounted on the housing wall 26 and would be facing the normal direction of travel of the vehicle so that air flow would be deflected into the plenum 134, through the openings 148 to the discs 22 and 24 and in particular through the openings 36 and 38. Because of deflector or baffle 48 the air would be forced upwardly through the ventilation channels 46 of the discs 22 and 24. The baffle 48 could be eliminated if the disc 24 is closed to the adapter sleeve 16. The discs 22 and 24 act as impellers creating a negative pressure in the area of the openings 36 and 38 thereby drawing air and pumping it to the periphery of the discs and exhausting it through the ventilation openings 32 allowing a great amount of heat to be dissipated in this way. The scoop 136 and the plenum 134 may be a molded plastic member with a hinge 138 molded therein along with nut and bolt adjustments 140 to open or reduce the opening of the scoop 136.

It has been contemplated to use this ventilation system for a different purpose, such as in an aircraft utilization. Accordingly, by providing a similar brake configuration on the wheels of the landing gear of an aircraft, that is with scoop 136, ventilation openings 32 and ventilated discs 22 and 24, a considerable flow of air can be passed through the (released) brakes ventilation system causing the wheels to rotate. It is particularly useful to have the wheels rotating at an equivalent ground speed, at the moment of landing. In order to control the rate of rotation of the wheels, that is so that they do not overrotate, the scoop 136 may be remotely adjusted and the active brakes could be applied. The wheel speed may be calibrated to the ground speed of the aircraft using a microprocessor using information from the counter sensor 150 and the aircraft ground speed data. The precise rate of rotation could be achieved by having the microprocessor modulate the scoop opening and the brakes to compensate for the excess of torque generated by the air flow through the brakes. This would be an important safety factor with respect to aircraft tires.

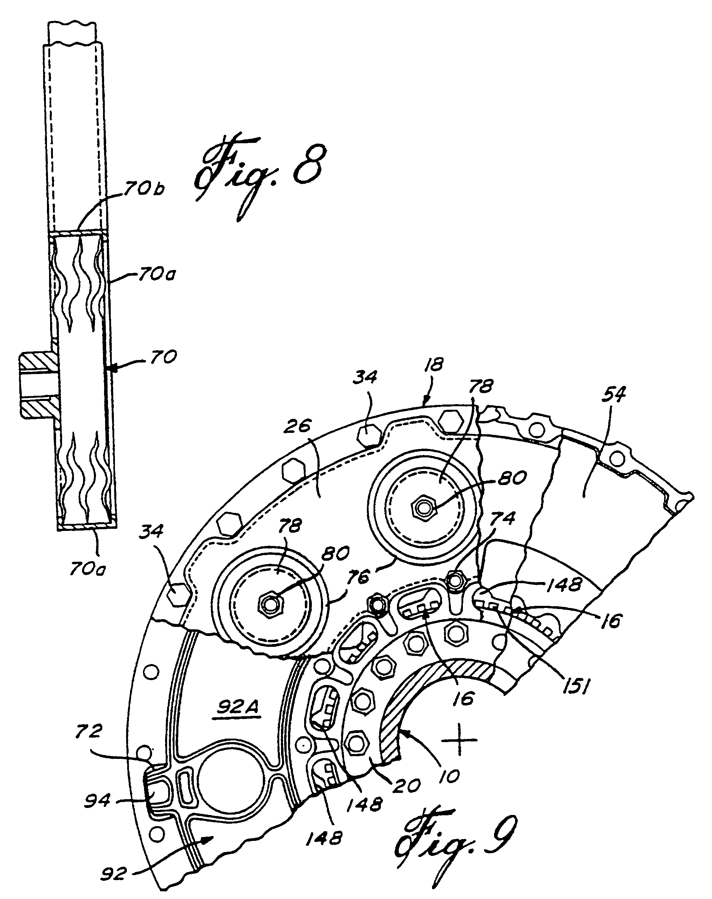

A fragment of a brake disc 22 is shown in Figs. 6 and 7 with the surfaces 22A and 22B illustrated. A groove 142 extends somewhat radially of the surfaces 22A and 22B and has a semi-circular cross-section. In a specific example, the groove may be 0.09" in depth with a width of 0.25" and a radius of 1/8 of an inch. It has been found that the provision of such a groove allows air to enter, when the brakes are released and the discs are rotating, to form a slight air cushion between the brake linings and the friction surface on the disc, thereby eliminating dragging and helping to cool the friction surfaces. At the same time the groove allows the brake surfaces to be cleaned by providing a drainage channel for any liquid forming on the brake linings or debris between the friction surface of the disc and the linings.

It has also been found that by providing a coating on the disc brake surface the heat is more easily dissipated. This coating may be a ceramic with aluminum particulates mixed therein and which has a particular heat sink and wear resistance properties. The coating may also be titanium carbo-nitride or chromium carbide. A coating is presently being developed by "SERMATECH INTERNATIONAL INC." for military purposes.

It has also been contemplated to provide a spray mix where water is sprayed into the plenum 134 through opening 134a to mix with ventilation air being deflected into the brake assembly to enhance the cooling of the brake assembly.

In the present embodiment, and as shown in Fig. 8, the bladder 70, which is in the form of an annular ring, is provided with an external annular dust cap 70a and an internal dust cap 70b. The dust caps 70a and 70b are provided to prevent debris from entering between the accordion like fins formed in the bellows-like bladder.

In the embodiment shown in Fig. 10, the bladder 290 adjusts the distance between lining 273 and friction surface 232a of disc 232, as will be described. In this embodiment, plate 223 is provided with integral posts 223a, which slide in bushings 266 mounted to the circumferential wall 226. The bushings 266 prevent posts 223a from jamming and thus plate 262 to slide parallel to intermediate wall 244. These posts 223a engage against the movable plate 262. Posts 264 extend from plate 262 to engage the backing plate 272.

A bladder 290 is provided between plate 223 and housing wall 222 which is bolted to the housing walls 226 and 248, as shown. The bladder 290 may be oil or grease filled. In either case, the increase of the volume in the bladder 290 will tend to distance the plate 223 from the wall 222, thereby moving the parking brake assembly including spring 256, spring abutment plate 262, posts 264, backing plate 272, and lining 273 closer to the disc 232. When the posts 223a have engaged the plate 262, the bladder 290 is used to compensate for brake disc or lining wear by pressing the plate 223 and posts 223a against the cage formed by plate 262 and posts 264.

As shown in Fig. 10, the bladders 282 and 284, which are operated by air pressure, can be controlled to either act as a positive force to apply the brakes, that is, when air pressure is increased in bladder 284 and bladder 282 is deflated, or to remove the brakes against the force of spring 256 by increasing the air pressure in bladder 282 and deflating bladder 284.

It is also contemplated that the bladders 70, 284, in Figs. 1 and 10 respectively, could be located between the housing walls 28, 224 and a backing plate for brake linings 58, 238.

Instead of the bladder 290, the compensation for brake wear could be provided by the compensating ring 229. Ring 229 is a segmental ring which can easily be removed from between intermediate wall 244 and flange 226b of housing wall 226. A compensating ring (not shown) may be provided between intermediate wall 244 and flanges 248b and 226a. The compensating ring 229 could also be placed between the housing wall 222 and the mounting flange 226c therefor. A compensating ring (not shown) would then be mounted between wall 222 and flange 248a. The idea is to allow for a decrease of the axial length of the housing 216 in order to compensate for wear of all parts of the braking system.

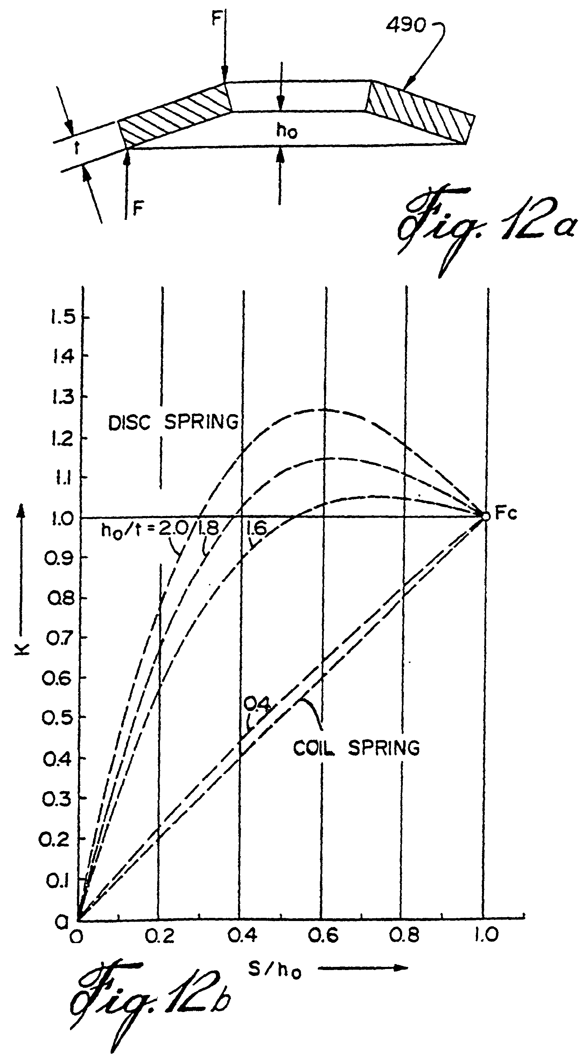

Fig. 11 shows an embodiment of the device for adjusting the spring length to increase the force against the brake shoes or for compensating for brake wear. In the embodiment shown, a grease nipple 392 in cap 361 can be utilized to insert grease or oil into the cavity 390 to displace the wall 355 in cylinder 354. When it is required to release the spring 356, the plug 393 can be released to allow the grease or oil to exit, thereby allowing the wall 355 to slide towards the cap 361.

In another embodiment, disc springs 490 could be used instead of coil springs 90,256,356. A single disc spring is illustrated in Fig. 12a and the characteristics thereof are shown in Fig. 12b. For a more ample description of the disc spring reference is made to the "Schnorr Handbook for Disc Springs" published 1983 by Adolf Schnorr GmbH & Co. KG, P.O. Box 60, D-7032 Sindelfingen 6, Germany. It has been found that by stacking disc springs in different configurations, different spring rates can be obtained.

One characteristic of the disc spring which is particularly useful in the present invention is that the full deflection spring load characteristic does not decrease until a large percentage of the spring deflection has occurred, i.e. approximately 50% to 70% when ho/t is larger than 1.6 and smaller than 2.0. The distance represented by the travel within these limits may represent the compensation for wear. With other spring characteristics the same travel, i.e. 50% to 70% would result in a significant reduction in the spring load characteristic as shown in Fig. 12b where
- ho: represents the formed height of an unloaded single disc in mm;
- t: represents the thickness of a single disc spring in mm;
- S: is the deflection in mm;
- K: = F/Fc;
- F: is the spring load;
- Fc: is the calculated load given by a single disc pressed flat.

## Claims

1. A disc brake assembly for a vehicle wheel (12) on a vehicle wherein the wheel (12) includes a hub journaled (14) to an axle (10) on the vehicle, the disc brake assembly is within the confines of the wheel (12) and concentric with the axle (10), the disc brake assembly including a housing (18) mounted to the vehicle and at least a radial disc (22, 24) within the housing (18), and means (16) mounting the disc (22, 24) to the wheel (12) the disc (22, 24) having at least a first radial planar friction surface (22a) and a first brake shoe (50) provided adjacent the first planar friction surface (22a) movable axially towards and away from the first friction surface (22a) on the disc (22, 24) for friction engagement therewith and release thereof, an intermediate wall member (62) mounted within the housing (18) and fixed thereto and extending parallel with the radial disc (22, 24) and located such that the first brake shoe (50) moves axially between the intermediate wall (62) and the radial disc (22, 24), means provided for restraining the first brake shoe from rotating with the disc (22, 24), movable spring abutment means (92) mounted for axial movement within the housing (18) between the intermediate wall (62) and a housing wall (26) such that the intermediate wall (62) is between the movable spring abutment means (92) and the first brake shoe (50), rigid pusher link members (94) extending between the spring abutment means (92) and the first brake shoe (50) and passing by the intermediate wall (62) such that the first brake shoe (50) moves axially with the spring abutment means (92), a spring means (90) extending between the housing wall (26) and the spring abutment means (92) such that the spring means (90) urges against the spring abutment means (92) to press the first brake shoe (50) against the first friction surface (22a) of the disc (22, 24) in a parking brake mode, the brake shoe (50) including lining (54) to engage the first planar friction surface (22a) of the disc and wear gauge means **characterised in that** the wear gauge means (110, 112, 130) includes a spring mounted plunger provided on the housing wall (62) and abutting against the spring abutment means (92) and spaced from the first brake shoe (50), and wherein the spring urges the plunger (116) against the spring abutment means (92) and a portion of the plunger (116) extends beyond the housing wall (18) whereby the brake wear will be measured continuously by determining the amount of protrusion of the plunger (116) exterior of the housing wall (18) in a safety brake mode to determine the wear of the lining (54, 56, 58) and the disc (22, 24) of the brake assembly.

2. A brake assembly as defined in claim 1, **characterized in that** the spring means includes a plurality of openings provided in annular spaced apart locations on the housing wall (26), bell covers (78) fitted on the respective openings (76) of the housing wall (26), and spring members (90) extending between the bell covers and the spring abutment means (92).

3. A brake assembly as defined in claim 2, **characterized in that** the bell cover has a bayonet type of connection with the housing wall at an opening.

4. A brake assembly as defined in claim 2, **characterized in that** the spring member is a coil spring.

5. A brake assembly as defined in claim 2, **characterized in that** the spring member is a disc spring.

6. A brake assembly as defined in claim 5, **characterized in that** the quotient of the unloaded disc spring over its thickness is larger than 1,6.

7. A brake assembly as defined in claim 2, **characterized in that** a bell cover (78) is provided exteriorly with a nut having a flange (82), the nut engaging the threads of a bolt (84), a head of the bolt being a blind sleeve (86), said blind sleeve having a flange (88) which abuts the spring means (90), such that if it is necessary to remove the tension of the spring against the abutment means, the nut is rotated to a point where the head of the bolt presses against the blind sleeve.

8. A brake assembly as recited in claim 1, **characterized in that** the brake wear gauge means (110, 112, 130) includes an electronic measuring device (130) in association with the plunger (132) to continuously measure the wear of the linings (54, 56, 58) and disc (22, 24) of the brake assembly in a safety brake mode and means for communicating the results to a display means.

9. A brake assembly as recited in claim 8, **characterized in that** an audio warning signal means is provided on a vehicle to warn the operator that the brake lining (54, 56, 58) and disc (22, 24) are worn to a predetermined level.

10. A brake assembly as recited in claim 8, **characterized in that** an interlock means is provided and will intervene a parking brake control means when the lining (54, 56, 58) and disc (22, 24) have exceeded a predetermined level of wear.

## Patentansprüche

1. Scheibenbremsenanordnung für ein Fahrzeugrad (12) an einem Fahrzeug, wobei das Rad (12) eine an einer Achse (10) am Fahrzeug zapfengelagerte Nabe (14) umfaßt, die Scheibenbremsenanordnung innerhalb der Grenzen des Rades (12) liegt und zur Achse (10) konzentrisch ist, wobei die Scheibenbremsenanordnung ein am Fahrzeug angebrachtes Gehäuse (18) und mindestens eine Radialscheibe (22, 24) im Gehäuse (18), und Mittel (16), mittels denen die Scheibe (22, 24) am Rad (12) angebracht ist, wobei die Scheibe (22, 24) wenigstens eine erste radiale ebene Reibungsfläche (22a) und eine erste Bremsbacke (50) aufweist, die benachbart der ersten ebenen Reibungsfläche (22a) axial zur ersten Reibungsfläche (22a) hin und von dieser fort auf der Scheibe (22, 24) für einen Reibungseingriff mit dieser und zur Freigabe von dieser bewegbar ist, ein Zwischenwandelement (62), das im Gehäuse (18) angebracht und an diesem befestigt ist und sich parallel zur Radialscheibe (22, 24) erstreckt und derart angeordnet ist, daß sich die erste Bremsbacke (50) in axialer Richtung zwischen der Zwischenwand (62) und der Radialscheibe (22, 24) bewegt, Mittel, vorgesehen zum Hindern der ersten Bremsbacke am Drehen zusammen mit der Scheibe (22, 24), eine bewegbare Federanschlageinrichtung (92), die zur axialen Bewegung im Gehäuse (18) zwischen der Zwischenwand (62) und einer Gehäusewand (26) angebracht ist derart, daß sich die Zwischenwand (62) zwischen der bewegbaren Federanschlageinrichtung (92) und der ersten Bremsbacke (50) befindet, starre Druckverbindungselemente (94), die sich zwischen der Federanschlageinrichtung (92) und der ersten Bremsbacke (50) erstrecken und durch die Zwischenwand (62) verlaufen derart, daß sich die erste Bremsbacke (50) axial mit der Federanschlageinrichtung (92) bewegt, eine Federeinrichtung (90) umfaßt, die sich zwischen der Gehäusewand (26) und der Federanschlageinrichtung (92) erstreckt derart, daß die Federeinrichtung (90) Druck gegen die Federanschlageinrichtung (92) ausübt, so daß die erste Bremsbacke (50) gegen die erste Reibungsfläche (22a) der Scheibe (22, 24) in einer Parkbremsbetriebsart gedrückt wird, wobei die Bremsbacke (50) einen Belag (54) für einen Eingriff mit der ersten ebenen Reibungsfläche (22a) der Scheibe und eine Verschleißmeßeinrichtung umfaßt, **dadurch gekennzeichnet, daß** die Verschleißmeßeinrichtung (110, 112, 130) einen federmontierten Kolben umfaßt, der an der Gehäusewand (62) vorgesehen ist und zur Anlage gegen die Federanschlageinrichtung (92) gelangt und von der ersten Bremsbacke (50) beabstandet angeordnet ist, und wobei die Feder den Kolben (116) gegen die Federanschlageinrichtung (92) drückt und sich ein Abschnitt des Kolbens (116) über die Gehäusewand (18) hinaus erstreckt, wodurch der Bremsenverschleiß fortlaufend gemessen wird, indem das Ausmaß des Vorstehens des Kolbens (116) außerhalb der Gehäusewand (18) in einer Sicherheitbremsbetriebsart bestimmt wird, um den Verschleiß des Belags (54, 56, 58) und der Scheibe (22, 24) der Bremsenanordnung zu bestimmen.

2. Bremsenanordnung nach Anspruch 1, **dadurch gekennzeichnet, daß** die Federeinrichtung eine Anzahl von Öffnungen, die an ringförmigen, getrennt beabstandet angeordneten Stellen an der Gehäusewand (26) vorgesehen sind, an den entsprechenden Öffnungen (76) der Gehäusewand (26) angebrachte Glockenabdeckungen (78) und Federelemente (90) umfaßt, die sich zwischen den Glockenabdeckungen und der Federanschlageinrichtung (92) erstrecken.

3. Bremsenanordnung nach Anspruch 2, **dadurch gekennzeichnet, daß** die Glockenabdeckung eine Verbindung vom Bajonett-Typ mit der Gehäusewand an einer Öffnung aufweist.

4. Bremsenanordnung nach Anspruch 2, **dadurch gekennzeichnet, daß** das Federelement eine Schraubenfeder ist.

5. Bremsenanordnung nach Anspruch 2, **dadurch gekennzeichnet, daß** das Federelement eine Tellerfeder ist.

6. Bremsenanordnung nach Anspruch 5, **dadurch gekennzeichnet, daß** der Quotient der unbelasteten Tellerfeder zur Dicke größer als 1,6 ist.

7. Bremsenanordnung nach Anspruch 2, **dadurch gekennzeichnet, daß** eine Glockenabdeckung (78) außen mit einer Mutter mit einem Flansch (82) versehen ist, wobei die Mutter mit den Gewinden eines Bolzens (84) in Eingriff steht, wobei ein Kopf des Bolzens eine Blindhülse (86) ist, wobei die Blindhülse einen Flansch (88) aufweist, der zum Anschlag gegen die Federeinrichtung (90) gelangt, derart, daß, wenn es erforderlich ist, die Spannung der Feder gegen die Anschlageinrichtung zu entfernen, die Mutter bis zu einem Punkt gedreht wird, bei dem der Kopf des Bolzens gegen die Blindhülse drückt.

8. Bremsenanordnung nach Anspruch 1, **dadurch gekennzeichnet, daß** die Bremsenverschleißmeßeinrichtung (110, 112, 130) eine elektronische Meßvorrichtung (130) in Verbindung mit dem Kolben (132), um den Verschleiß der Beläge (54, 56, 58) und der Scheibe (22, 24) der Bremsenanordnung in einer Sicherheitsbremsenbetriebsart fortlaufend zu messen, und Mittel umfaßt, um die Ergebnisse zu einer Anzeigeeinrichtung zu übertragen.

9. Bremsenanordnung nach Anspruch 8, **dadurch gekennzeichnet, daß** ein akustisches Warnsignalmittel an einem Fahrzeug vorgesehen ist, um die Bedienungsperson zu warnen, daß der Bremsbelag (54, 56, 58) und die Scheibe (22, 24) bis zu einer vorbestimmten Höhe abgenutzt sind.

10. Bremsenanordnung nach Anspruch 8, **dadurch gekennzeichnet, daß** ein Verriegelungsmittel vorgesehen ist und bei einer Parkbremsenkontrolleinrichtung eingreift, wenn der Belag (54, 56, 58) und die Scheibe (22, 24) eine vorbestimmte Abnutzungshöhe überschritten haben.

## Revendications

1. Ensemble de frein à disque pour une roue (12) de véhicule sur un véhicule, dans lequel la roue (12) comprend un moyeu monté de façon à tourner (14) sur un essieu (10) du véhicule, l'ensemble de frein à disque est dans les limites de la roue (12) et concentrique à l'essieu (10), l'ensemble de frein à disque comprenant un carter (18) monté sur le véhicule, et au moins un disque radial (22, 24) à l'intérieur du carter (18), et un moyen (16) montant le disque (22, 24) sur la roue (12), le disque (22, 24) comportant au moins une première surface de frottement radiale plane (22a) et un premier patin de frein (50) placé en position adjacente à la première surface de frottement plane (22a) et mobile axialement de façon à s'approcher et s'éloigner de la première surface de frottement (22a) du disque (22, 24) afin de coopérer par frottement avec celle-ci et de s'en dégager, une paroi annulaire intermédiaire (62) montée à l'intérieur du carter (18) et fixée à celui-ci en s'étendant parallèlement au disque radial (22, 24) et positionnée de telle sorte que le premier patin de frein (50) se déplace axialement entre la paroi intermédiaire (62) et le disque radial (22, 24), un moyen prévu pour empêcher le premier patin de frein de tourner avec le disque (22, 24), un moyen mobile (92) d'appui d'élément élastique monté en vue d'un déplacement axial à l'intérieur du carter (18) entre la paroi intermédiaire (62) et une paroi de carter (26) de telle sorte que la paroi intermédiaire (62) se trouve entre le moyen mobile (92) d'appui d'élément élastique et le premier patin de frein (50), des éléments rigides formant tiges de poussée (94) s'étendant entre le moyen (92) d'appui d'élément élastique et le premier patin de frein (50) et passant par la paroi intermédiaire (62) de telle sorte que le premier patin de frein (50) se déplace axialement avec le moyen (92) d'appui d'élément élastique, un moyen élastique (90) s'étendant entre la paroi de carter (26) et le moyen (92) d'appui d'élément élastique de telle sorte que le moyen élastique (90) exerce une poussée contre le moyen (92) d'appui d'élément élastique pour presser le premier patin de frein (50) contre la première surface de frottement (22a) du disque (22, 24) dans un mode de frein de parking, le patin de frein (50) comportant une garniture (54) destinée à coopérer avec la première surface de frottement plane (22a) du disque et un moyen formant témoin d'usure, **caractérisé en ce que** le moyen formant témoin d'usure (110, 112, 130) comprend un piston à ressort placé sur la paroi de carter (62) et butant contre le moyen (92) d'appui d'élément élastique et espacé du premier patin de frein (50), et dans lequel le ressort pousse le piston (116) contre le moyen (92) d'appui d'élément élastique et une partie du piston (116) s'étend au-delà de la paroi de carter (18), grâce à quoi l'usure du frein est mesurée en continu en déterminant le niveau de saillie du piston (116) à l'extérieur de la paroi de carter (18) dans un mode de frein de sécurité pour déterminer l'usure de la garniture (54, 56, 58) et du disque (22, 24) de l'ensemble de frein.

2. Ensemble de frein selon la revendication 1, **caractérisé en ce que** le moyen élastique comporte une pluralité d'ouvertures prévues en des emplacements annulaires espacés sur la paroi de carter (26), des couvercles en cloche (78) montés sur les ouvertures (76) respectives de la paroi de carter (26), et des éléments formant ressorts (90) s'étendant entre les couvercles en cloche et le moyen (92) d'appui d'élément élastique.

3. Ensemble de frein selon la revendication 2, **caractérisé en ce que** le couvercle en cloche a une connexion de type baïonnette avec la paroi de carter au niveau d'une ouverture.

4. Ensemble de frein selon la revendication 2, **caractérisé en ce que** l'élément formant ressort est un ressort hélicoïdal.

5. Ensemble de frein selon la revendication 2, **caractérisé en ce que** l'élément formant ressort est un ressort à disque.

6. Ensemble de frein selon la revendication 5, **caractérisé en ce que** le quotient du ressort à disque non chargé par son épaisseur est supérieur à 1,6.

7. Ensemble de frein selon la revendication 2, **caractérisé en ce qu'**un couvercle en cloche (78) est muni extérieurement d'un écrou comportant une bride (82), l'écrou coopérant avec le filetage d'un boulon (84), une tête du boulon étant un manchon borgne (86), ledit manchon borgne comportant une bride (88) qui bute contre le moyen élastique (90), de sorte que s'il est nécessaire de retirer la tension du ressort contre le moyen d'appui, l'écrou est mis en rotation jusqu'à un point où la tête du boulon exerce une pression contre le manchon borgne.

8. Ensemble de frein selon la revendication 1, **caractérisé en ce que** le moyen formant témoin d'usure (110, 112, 130) de frein comporte un dispositif de mesure électronique (130) associé au piston (132) pour mesurer en continu l'usure des garnitures (54, 56, 58) et du disque (22, 24) de l'ensemble de frein dans un mode de frein de sécurité et un moyen permettant de communiquer les résultats à un moyen d'affichage.

9. Ensemble de frein selon la revendication 8, **caractérisé en ce qu'**un signal d'alarme audio est prévu sur un véhicule pour alerter l'opérateur que la garniture (54, 56, 58) de frein et le disque (22, 24) sont usés à un niveau prédéterminé.

10. Ensemble de frein selon la revendication 8, **caractérisé en ce qu'**un moyen de verrouillage est prévu et intervient dans un moyen de commande de frein de parking lorsque la garniture (54, 56, 58) et le disque (22, 24) dépassent un niveau d'usure prédéterminé.
